# EUROPEAN PATENT APPLICATION

(11) **EP 1 002 690 A1**
(43) Date of publication of application: **24.05.2000**
(21) Application number: 99309056.2
(22) Date of filing: 15.11.1999
(51) Int. Cl.: B60N 2/00, B60R 21/00

(54) **Sitting detection apparatus for an automobile seat**

(30) Priority: 20.11.1998 JP 33075598
(71) Applicant: Airbag Systems Company Ltd., Tomioka-shi, Gunma (JP)
(72) Inventor: Okano, Masami, Tomioka-shi, Guma (JP); Ishizuka, Hideki, Tomioka-shi, Guma (JP); Naganuma, Hiroshi, Tomioka-shi, Guma (JP)
(74) Representative: Rackham, Stephen Neil

(57) **Abstract**

A sitting detection apparatus has a conductive detected member (1) provided to a seat cusion of an automobile seat (3), and a detector (2) including an oscillation circuit (7) with an antenna (6) which radiates a weak high-frequency wave from the antenna (6) toward the detected member (1). The detected member is provided to the seat cushion (3) so as to be displaced in accordance with flexure of the seat cushion (3) due to the sitting/non-sitting of the driver or passenger. The antenna (6) of the oscillation circuit (7) is fixedly arranged in relation to said detected member (1) so that the distance between the detected member (1) and the antenna (6) varies with displacement of the detected member (1). The detector (2), detects the presence of a person sitting in the automobile seat (3) as a result of variation in oscillating output of the oscillation circuit (7) which is caused by variation of the coupling between the detected member (1) and the antenna (6), as a resulting change in their separation.

## Description

The present invention relates to a sitting detection apparatus for detecting whether a driver or passenger sits in an automobile seat.

An example of a prior art relevant to the present invention has been shown in the Japanese Patent No.2669659. This prior art reference discloses sitting posture detecting means for detecting a sitting posture of a person who sits in an automobile seat. The detecting means has a lot of pressure sensors which are provided inside a seat cushion and a seat back of the automobile seat, and detects whether loins of the person sitting in the automobile seat is in a forward position or a backward position of the automobile seat based on outputs of each pressure sensor. Each of the pressure sensors has a pair of electric conductors and an elastic insulator provided between the electric conductors. When the person sits in the automobile seat, a space between the pair of electric conductors is varied by pressure, and thereby an electrostatic capacity of the pressure sensor varies. The detecting means detects the seated posture of the person based on variations of electrostatic capacities of each pressure sensor.

According to the detecting means described above, it is also possible to detect whether a driver or passenger sits in the automobile seat. However, in the above-mentioned detecting means, a plurality of the pressure sensors must be provided inside the automobile seat, and lead wires of the pressure sensors must be each drawn out from the automobile seat. Hence, work for providing the detecting means to the automobile seat becomes troublesome. Also, by deformation of the automobile seat due to sitting/non-sitting of a person, disconnection tends to occur in a connection between the pressure sensor and the lead wire in particular. Because of this, a problem of durability may occur. Furthermore, since the pressure sensors are provided inside the automobile seat, it is difficult to apply to an existing automobile seat.

It is an object of the present invention to provide an improved sitting detection apparatus for an automobile seat.

According to this invention a sitting detection apparatus for detecting whether a driver or passenger sits in an automobile seat, comprises: a conductive detected member that is provided to a seat cushion of the automobile seat so as to be displaced in accordance with flexure of the seat cushion due to sitting/non-sitting of the driver or passenger; and a detector including an oscillation circuit with an antenna which radiates a weak high-frequency wave from said antenna toward said detected member, at least said antenna being fixedly arranged in relation to the detected member so that a distance between said antenna and said detected member varies with displacement of the detected member, said detector detecting the sitting/non-sitting of the driver or passenger based on variation in oscillating output of said oscillation circuit which is caused by the displacement of said detected member.

According to a composition like this, when the driver or passenger sits in the automobile seat, the distance between the detected member and the antenna varies with the displacement of the detected member, a loss which occurs in the oscillation circuit varies, and thereby the oscillating output of the oscillation circuit varies. Hence, based on the variation in the oscillating output of the oscillation circuit, whether the driver or passenger sits in the automobile seat can be detected. The detected member is merely provided to the automobile seat so as to displace in accordance with the sitting/non-sitting. Any lead wire is not needed. Since there is no need of drawing out any lead wire from the automobile seat, mounting of the apparatus becomes easy. Also, since a problem such as disconnection of lead wire does not occur, durability of the apparatus can be improved. Furthermore, since the detected member can be provided to a bottom face of the seat cushion, it is possible to easily apply to an existing automobile seat.

Particular embodiments of the present invention will now be described with reference to the accompanying drawings; wherein:-
Fig. 1 is a block diagram showing an embodiment of a sitting detection apparatus according to the present invention;
Fig. 2 is a composition drawing showing an example of how to attach a detected member and an antenna shown in Fig. 1;
Fig. 3 is a circuit diagram showing an example of a detector in Fig. 1;
Fig. 4 is an explanatory drawing for explaining a relationship between the detected member and the antenna in Fig. 1;
Fig. 5 is a drawing showing a relationship between a distance between the detected member and the antenna and a detected voltage of an oscillating output detection circuit in Fug. 1;
Fig. 6 is a composition drawing showing another example of how to attach the detected member in Fig. 1;
Fig. 7 is a composition drawing showing an example of a composition for attaching the detector in Fig. 1;
Fig. 8 is a composition drawing showing the principal portions of the composition of Fig. 7 in the case of looking from a direction indicated by an arrow A of Fig. 7;
Fig. 9 is a composition drawing showing the principal portions of another example of a composition for attaching the detector in Fig. 1; and
Fig. 10 is a drawing showing another example of a detected member in the present invention.

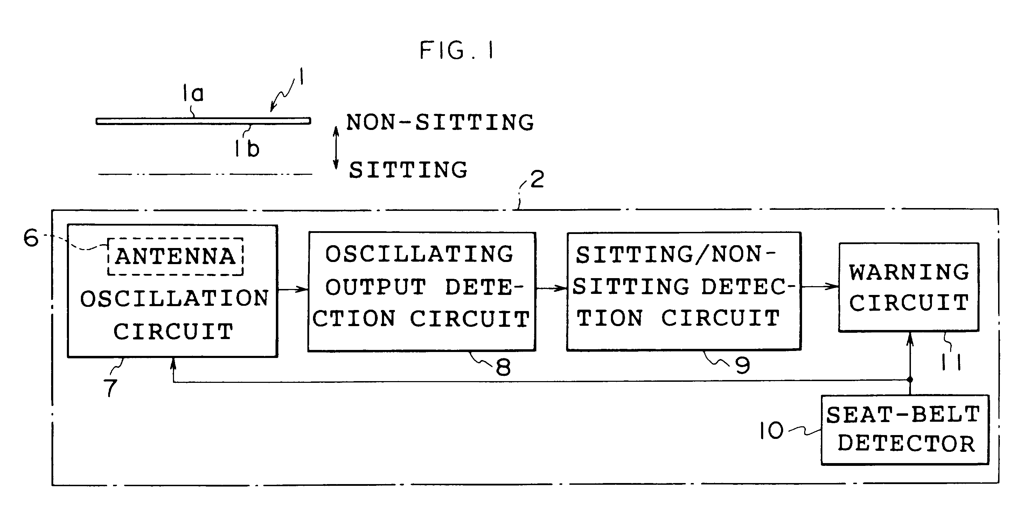

In Fig. 1, a reference numeral 1 is a detected member, and a reference numeral 2 is a detector.

The detected member 1 is a conductive sheet member which is freely deformable. In this embodiment, the detected member 1 is composed of a flexible resin sheet 1a and a metal film 1b such as aluminum. The metal film 1b is formed in at least one face of the resin sheet la. This is the same composition as metalised foil used for confectionary or potato crisps to protect them from moisture and ultraviolet rays. The metal film 1b is formed in the resin sheet 1a by evaporation of metal, adhesion of metal film or the like.

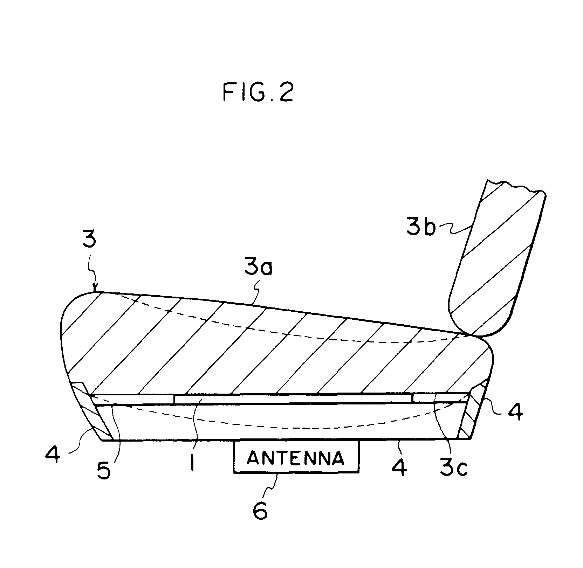

Fig. 2 shows an example of how to attach the detected member 1. In Fig. 2, a reference numeral 3 is an automobile seat having a seat cushion 3a and a seat back 3b, a reference numeral 4 is a seat frame for maintaining the automobile seat 3, and a reference numeral 5 is a seat spring provided at a bottom face 3c side of the cushion 3a. The spring 5 is supported by the frame 4. The detected member 1 is provided between the cushion 3a and the spring 5. When a driver or passenger sits in the automobile seat 3, the seat cushion 3a is weighed down as shown by broken line, and thereby the detected member 1 is displaced downwards. When the driver or passenger leaves the automobile seat 3, the detected member 1 is displaced upwards and returned to a former position by a return of the cushion 3a.

Reverting to Fig. 1, the detector 2 has an oscillation circuit 7 including an antenna 6, an oscillating output detection circuit 8, a sitting/non-sitting detection circuit 9, a seat-belt detector 10 and a warning circuit 11. The oscillation circuit 7 generates a weak high-frequency wave, and radiates the high-frequency wave from the antenna 6 toward the detected member 1. Output power of the oscillation circuit 7 is about some mW. Output frequency of the oscillation circuit 7 is about 40 - 100 MHz. Preferably, the output frequency is set to frequency which is not used by frequency-modulation broadcasting of a radio and so on. The oscillating output detection circuit 8 inputs oscillating output of the oscillation circuit 7, and outputs a voltage signal representative of the oscillating output by rectifying and smoothing the oscillating output. As described below, the oscillating output amplitude of the oscillation circuit 7 varies according to a distance between the detected member 1 and the antenna 6, and the output voltage of the oscillating output detection circuit 8 varies with variation of the output amplitude of the ocillation circuit 7. The sitting/non-sitting detection circuit 9 inputs the output of the oscillating output detection circuit 8, detects whether the driver or passenger sits in the automobile seat 3 based on a comparison between the output of the oscillating output detection circuit 8 and a predetermined reference voltage, and outputs a detecting signal representative thereof. The seat-belt detector 10 detects whether a seat-belt (not shown in the drawings) of the automobile seat 3 is fastened, that is, whether the seat-belt is connected to a buckle, and outputs a detecting signal representative thereof. The warning circuit 11 receives the detecting signals of the sitting/non-sitting detection circuit 9 and the seat-belt detector 10, and issues a warning when the sitting/non-sitting detection circuit 9 detects that the driver or passenger sits in the automobile seat 3, and, when the seat-belt detector 10 detects that the seat-belt is not fastened. When the seat-belt is fastened under the state that the warning is given, the warning circuit 11 stops the warning. And, in this embodiment, in the case in which the seat-belt detector 10 detects that the seat-belt is fastened, the oscillation circuit 7 is designed to stop its oscillation irrespective of the sitting/non-sitting of the driver or passenger.

At least the antenna 6 of the oscillation circuit 7 is fixedly arranged in relation to the detected member 1 which is displaced in upward and downward directions according to the sitting/non-sitting of the driver or passenger. In this embodiment, as shown in Fig. 2, the antenna 6 is fixed to the seat frame 4 so as to be positioned below the detected member 1. By this, the antenna 6 is designed to be kept in an prescribed position even when the seat cushion 3a namely the detected member 1 is displaced in upward and downward directions. Therefore, the distance between the detected member 1 and the antenna 6 becomes small when the detected member 1 is displaced downwards by the sitting of the driver or passenger, and becomes large when the detected member 1 is displaced upwards by the non-sitting of the driver or passenger. In case the automobile seat 3 has an adjusting mechanism for adjusting height of the seat cushion 3a, the seat frame 4 moves together with the cushion 3a. Hence, even when the height of the cushion 3a is varied, the antenna 6 is maintained at the prescribed position in relation to the detected member 1. By the way, in the composition of Fig. 2, the antenna 6 is merely provided to the seat frame 4. However , as described below, it is also possible to provide the detector 2 having the antenna 6 to the seat frame 4.

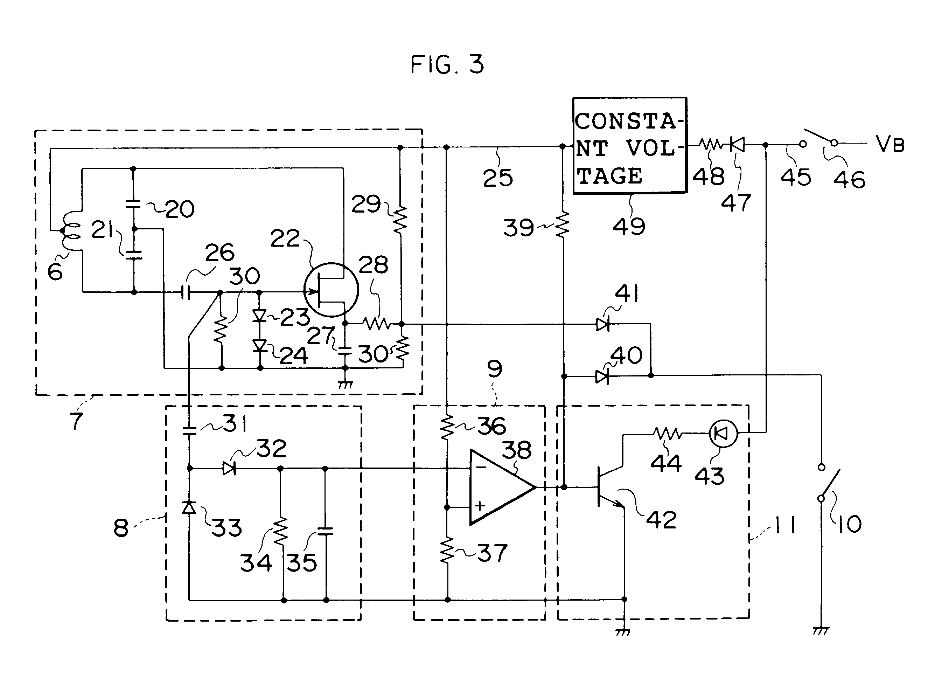

Fig. 3 is a circuit diagram showing an example of the detector 2. In Fig. 3, components that are given the same reference numerals as those of Fig. 1 indicate the same.

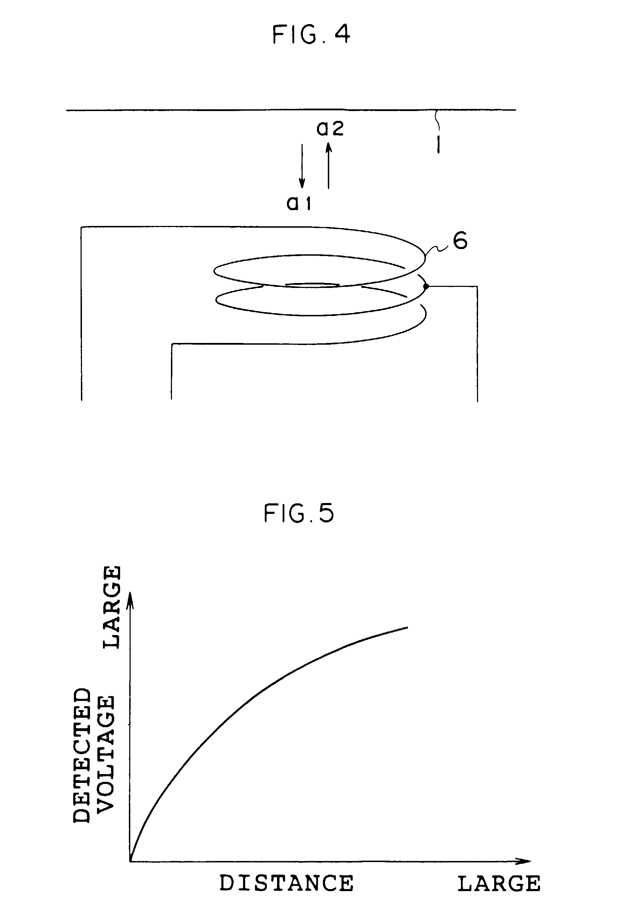

In this example, the antenna 6 is a coil antenna. In addition to the coil antenna 6, the oscillation circuit 7 includes a series connection of two resonance capacitors 20 and 21 which constitute a parallel resonance circuit together with the coil antenna 6, an oscillating FET (Field-Effect Transistor) 22, and a series connection of two diodes 23 and 24 for limiting oscillating amplitude of the FET 22. The number of turns of the coil antenna 6, in this example, is three turns as shown in Fig. 4. If the number of turns in the coil antenna 6 is increased, variation in the output of the oscillation circuit 7 becomes small by a drop of Q factor (quality factor), and thereby easiness of the detection is injured. Hence, the number of turns in the coil antenna 6 is preferably set to several turns so that Q factor does not drop.

Fig. 4 shows a relationship between the detected member 1 and the coil antenna 6. The coil antenna 6 is provided to the seat frame 4 so that an end face in its axial direction opposes the detected member 1. As indicated by arrows al and a2, the detected member 1 approaches the antenna 6 when the driver or passenger sits in the automobile seat 3, and the detected member 1 is estranged from the antenna 6 when the driver or passenger quits the automobile seat 3.

Reverting to Fig. 3, the coil antenna 6 has a center tap, and the center tap is connected to a constant voltage line 25. One end of the parallel resonance circuit constituted by the coil antenna 6 and the resonance capacitors 20 and 21 is connected to a drain of the oscillating FET 22. The other end of the parallel resonance circuit is connected through a feedback capacitor 26 to a gate of the FET 22. A source of the oscillating FET 22 is connected through a capacitor 27 to a portion between the resonance capacitors 20 and 21, and is also grounded through the capacitor 27. The source of the FET 22 is further connected through a resistor 28 to a portion between resistors 29 and 30 which are serially connected and inserted between the constant voltage line 25 and the ground. The series connection of the diodes 23 and 24 is inserted between the gate of the FET 22 and the ground so that the direction from the gate of the FET 22 toward the ground becomes the forward direction. The diodes 23 and 24 limits the oscillating amplitude of the FET 22 by suppressing a gate voltage of the FET 22. By this, dispersion in strength of oscillation due to dispersion in production of the FET 22 is suppressed, and the strength of oscillation of the FET 22 is kept at a predetermined strength. Therefore, an optional FET can be used as the oscillating FET 22 without considering the dispersion in production. As the diodes 23 and 24, from the viewpoint of making Q factor large, it is desirable to use Schottky diode which is smaller in capacitive component than silicon diode. A reference numeral 30 is an output resistor. The output resistor 30 is inserted between the gate of the oscillating FET 22 and the ground. By way of the output resistor 30, the oscillating output of the oscillation circuit 7 is given to the oscillating output detection circuit 8. When the detected member 1 nears the antenna 6, the oscillating amplitude of the osciration circuit 7 is decreased by increment of eddy-current loss. Conversely, when the detected member 1 is away from the antenna 6, the oscillating amplitude is increased by decrement of eddy-current loss.

In this example, the constant voltage line 25 is not connected to the drain of the FET 22, but is connected to the center tap of the antenna 6. Because of this, Q factor becomes large as compared with a case where the constant voltage line 25 is connected to the drain of the FET 22.

In this example, the FET 22 is used as an active element for oscillation. While, if a bipolar transistor is used as the active element, Q factor becomes small by impedance drop due to bias resistors. In this example, since the FET 22 is used as the active element, the drop of Q factor is prevented.

The oscillating output detection circuit 8 has a coupling capacitor 31 for inputting the oscillating output of the oscillation circuit 7, diodes 32 and 33 for full-wave rectifying the oscillating output provided through the coupling capacitor 31, and a resistor 34 and a capacitor 35 for smoothing a full-wave rectified output of the diodes 32 and 33. As is clear from the above description, the diodes 32 and 33 constitute a rectifier circuit, and the resistor 34 and the capacitor 35 constitute a smoothing circuit. The coupling capacitor 31 is preferably set to a small capacitance value so that the detection of the sitting/non-sitting does not become difficult by the drop of Q factor. As the diodes 32 and 33 for rectification, since the oscillating amplitude of the oscillation circuit 7 is small, it is desirable to use Schottky diode which has a small voltage drop in the forward direction. The oscillating output detection circuit 8 gives the detected voltage which becomes higher according to the increment of the output amplitude of the oscillation circuit 7, and gives the detected voltage which becomes lower according to the decrement of the output amplitude of the oscillation circuit 7.

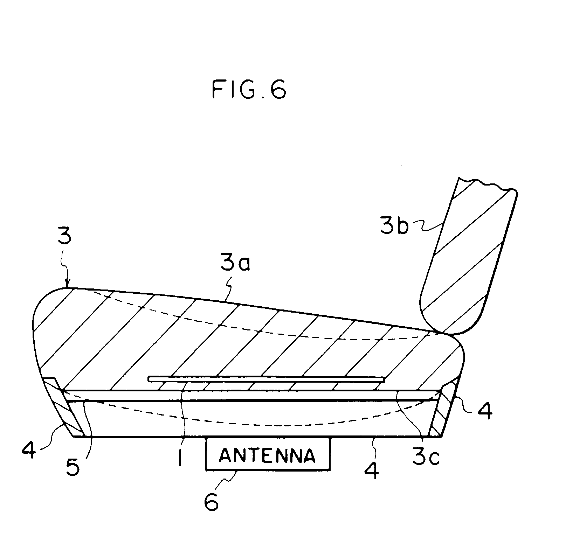

Fig. 5 shows a relationship between the distance between the detected member 1 and the antenna 6 and the detected voltage of the oscillating output detection circuit 8. As is clear from Fig. 5, according as the detected member 1 approaches the antenna 6, the detected voltage of the oscillating output detection circuit 8 becomes smaller because the output amplitude of the oscillation circuit 7 is decreased. When the detected member 1 is away from the antenna 6, the detected voltage becomes large.

The sitting/non-sitting detection circuit 9 has reference resistors 36 and 37 of a series connection, and a comparator 38. The reference resistors 36 and 37 are inserted between the constant voltage line 25 and the ground, and provide the predetermined reference voltage to a positive input terminal of the comparator 38. A negative input terminal of the comparator 38 receives the detected voltage of the oscillating output detection circuit 8. The reference voltage is set to a value higher than the detected voltage of the oscillating output detection circuit 8 when the driver or passenger sits in the automobile seat 3, and lower than the detected voltage of the oscillating output detection circuit 8 when the driver or passenger does not sit in the automobile seat 3. A standard for deciding whether the driver or passenger sits in the automobile seat 3 can be optionally set by selection of the reference voltage namely the reference resistors 36 and 37. In this example, since the comparator 38 is an open-collector type, an output terminal of the comparator 38 is pulled up by the constant voltage line 25 through a resistor 39. The sitting/non-sitting detection circuit 9 outputs a low level signal representative of the non-sitting when the detected voltage of the oscillating output detection circuit 8 is higher than the reference voltage, and outputs a high level signal representative of the sitting when the detected voltage is lower than the reference voltage.

In this example, the seat-belt detector 10 is a seat-belt switch. The seat-belt switch 10 is in an on state when the seat-belt is connected to the buckle, and is in an off state when the seat-belt is disconnected from the buckle. The seat-belt switch 10 at its one end is grounded. The other end of the seat-belt switch 10 is connected through a diode 40 to the output terminal of the comparator 38 of the sitting/non-sitting detection circuit 9, and is also connected through a diode 41 to a portion between the resistors 29 and 30 of the oscillation circuit 7. Therefore, when the seat-belt switch 10 is in the on state, the output of the comparator 38 of the sitting/non-sitting detection circuit 9 becomes the low level, and further the oscillation of the oscillation circuit 7 is stopped.

The warning circuit 11 has a switching transistor 42 and a warning lamp 43. The switching transistor 42 at its base is connected to the output terminal of the comparator 38 of the sitting/non-sitting detection circuit 9, at its collector is connected through a resistor 44 and the warning lamp 43 to a power supply line 45, and at its emitter is grounded. The warning lamp 43 is provided so that the driver or passenger sitting in the automobile seat 3 can see it easily. The warning circuit 11 drives the warning lamp 43 when the comparator 38 of the sitting/non-sitting detection circuit 9 outputs the high level signal, and, when the seat-belt switch 10 is in the off state. That is, the warning lamp 43 is driven when the seat-belt is not connected to the buckle under the state that the driver or passenger sits in the automobile seat 3.

The power supply line 45 receives a power source VB from a car-mounted battery (not shown in the drawings) through an ignition switch 46, and supplies the power source VB to a constant voltage circuit 49 through a diode 47 and a resistor 48. The constant voltage circuit 49 supplies a predetermined constant voltage to the constant voltage line 25.

In the above-mentioned composition, when the ignition switch 46 is manipulated to an on position, the oscillation of the oscillation circuit 7 is started. When the driver or passenger does not sit in the automobile seat 3, the distance between the detected member 1 and the antenna 6 becomes large. That is, the detected member 1 is distant to the utmost from the antenna 6. Because of this, the loss which occurs in the oscillation circuit 7 is small, and the detected voltage of the oscillating output detection circuit 8 becomes above the reference voltage of the sitting/non-sitting detection circuit 9. Therefore, the output of the comparator 38 is in the low level, and the warning lamp 43 is not driven.

When the driver or passenger sits in the automobile seat 3, the detected member 1 is displaced downwards by flexure of the cushion 3a to approach the antenna 6. Hence, the loss which occurs in the oscillation circuit 7 becomes large, and the detected voltage of oscillating output detection circuit 8 becomes below the reference voltage of the sitting/non-sitting detection circuit 9. As a result, the comparator 38 outputs the high level signal, and thereby the warning lamp 43 is lighted. By this, the warning is given to the driver or passenger so as to fasten the seat-belt. When the seat-belt is fastened, the seat-belt switch 10 is made on. Thereby, the output of the comparator 38 is in the low level to put out the warning lamp 43, and the oscillation of the oscillation circuit 7 is stopped.

In the case in which the stop of the oscillation of the oscillation circuit 7 is desired for some reason or other, the seat-belt switch 10 may be in on state by connecting the seat-belt to the buckle. By this, the oscillation circuit 7 stops its oscillation irrespective of the sitting/non-sitting of the person.

In the embodiment mentioned above, the detected member 1 is provided between the seat cushion 3a and the seat spring 5. However, if it is not necessary to consider an easy application to an existing automobile seat, the detected member 1 can be provided inside the cushion 3a as shown in Fig. 6.

Although the detected member 1 is composed of the resin sheet la and the metal film 1b in the above-mentioned embodiment, this is not intended to limit the scope of the invention. The detected member 1 may be a member which can be displaced in accordance with the flexure of the seat cushion 3a, and, which can make the oscillating output of the oscillation circuit 7 vary in accordance with the distance between the member and the antenna 6.

Although the antenna 6 is provided to the seat frame 4 of the automobile seat 3 in the above-mentioned embodiment, this is not intended to limit the scope of the invention. For example, if an automobile seat is fixed on a floor of an automobile so as to not move, the antenna 6 may be mounted on the floor of the automobile. That is, the antenna 6 is provided so as to be immovable in relation to the detected member 1.

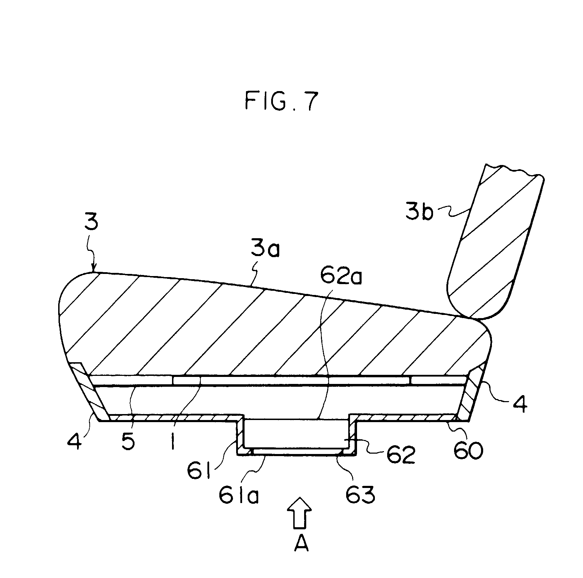

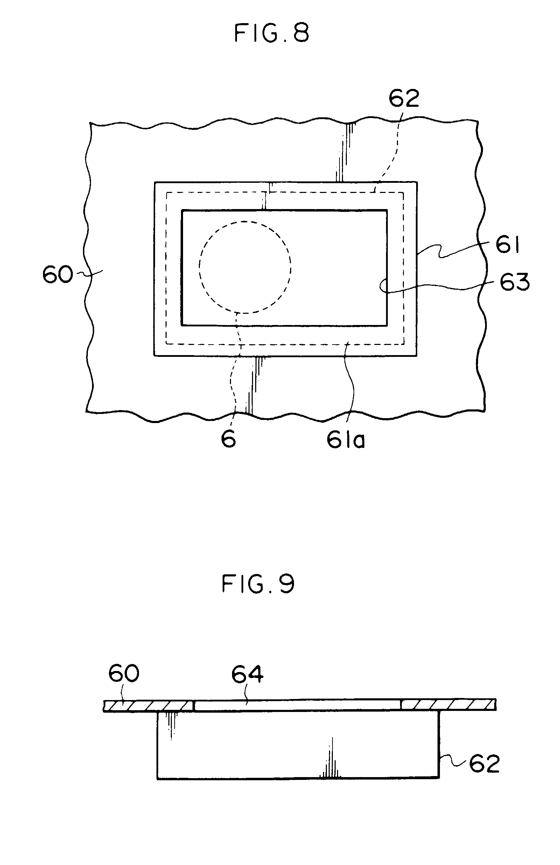

Fig. 7 shows an example of a composition for attaching the detector 2 of Fig. 1, and Fig. 8 shows the principal portions of a bottom face of the automobile seat 3 when the composition of Fig. 7 is looked from a direction indicated by an arrow A. In Figs. 7 and 8, components given the same reference numerals as those of Fig. 2 indicate the same.

In Figs. 7 and 8, a reference numeral 60 is a bottom plate of the automobile seat 3. The bottom plate 60 is provided under the seat cushion 3a, and fixed to the seat frame 4 so as to maintain a fixed position in relation to displacement in the upward and downward directions of the seat cushion 3a due to the sitting/non-sitting. The bottom plate 60 is generally made of steel plate, and is widely used in an automobile seat in order that the seat cushion 3a does not sink deeply more than necessary. In this example, the bottom plate 60 is utilized as a member for mounting the detector 2. In the bottom plate 60, a container portion 61 is formed so as to face the detected member 1. The container portion 61 is formed in the concave shape on the bottom plate 60 so as to protrude downwards. In this container portion 61, a non-conductive case 62 in which the detector 2 of Fig. 1 is housed is mounted. When the bottom plate 60 is a conductive material such as the steel plate, an opening 63 is formed in a bottom face 61a of the container portion 61 so that the detecting function of the detector 2 is not obstructed. Since the antenna 6 of the detector 2 is provided as shown in Fig. 4 in relation to the detected member 1, that is, since the antenna 6 has a directivity in the upward and downward directions of Fig. 7, the steel plate of a side wall of the container portion 61 does not obstruct the detecting function of the detector 2. Furthermore, the container portion 61 of the bottom plate 60 is formed so that an upper face 62a of the case 62 in which the detector 2 is housed does not protrude upwards from the container portion 61 namely the bottom plate 60. The case 62 is fixed in the container portion 61 by screw or rigidly fitting into the container portion 61, for example. The container portion 61 may be formed in a body with the bottom plate 60, or formed separately from the bottom plate 60.

According to the above-mentioned composition for mounting, the detector 2 can be attached to the automobile seat 3 without providing a maintaining member anew. Furthermore, even when a person being heavy in weight sits in the seat cushion 3a, or even when a person moves violently in upward and downward directions on the seat cushion 3a, it is possible to prevent breakage of the detector 2 and slipping off in a position of the detector 2. That is, even when the case 62 receives a large load, for example, by the sitting of the person who is heavy in weight, since the case 62 does not protrude above the bottom plate 60, the load is dispersed to the bottom plate 60. Because of this, the breakage of the detector 2 in the case 62 is prevented. Also, since the case 62 is fixed in the container portion 61, the position of the detector 2 does not vary. Hence, performance and durability of the detector 2 can be secured. In addition, since the case 62 does not protrude above the bottom plate 60, the automobile seat 3 does not become uncomfortable.

Fig. 9 shows another example of composition for attaching the detector 2. In Fig. 9, components given the same reference numerals as those of Fig. 7 indicate the same. In the example of Fig. 9, an opening 64 is formed in the bottom plate 60 so as to face the detected member 1 which is displaced in the upward and downward directions by the sitting/non-sitting. The case 62 in which the detector 2 is housed is provided beneath the opening 64, and fixed to the bottom plate 60. According to this, since the opening 64 is merely formed in the bottom plate 60, work for attaching the detector 2 becomes simpler than the example of Fig. 7. Composition of other portions is as described in Figs. 7 and 8.

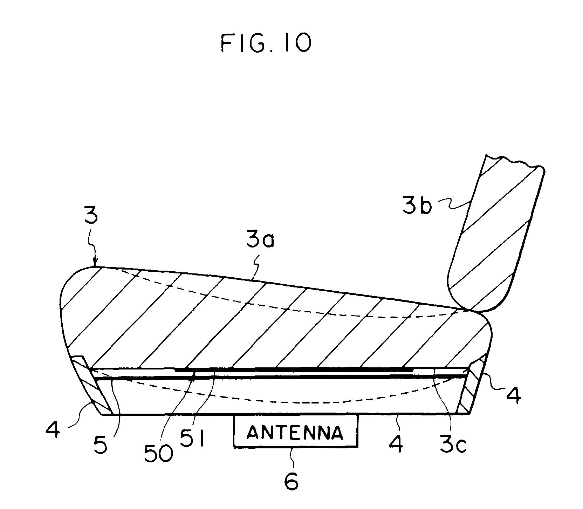

Fig. 10 shows another example of the detected member. In this example, instead of the detected member 1 with the sheet shape, the detected member 50 is formed by a conductive coating paint 51 which is spread to the bottom face 3c of the seat cushion 3a. As the conductive coating paint 51, a well-known paint can be used. Composition of other portions is as described above.

As described above in detail, according to the embodiments of the present invention, the detected member is provided to the automobile seat so that the distance between the antenna of the detector and the detected member is varied by the sitting/non-sitting of the driver or passenger, and whether the driver or passenger sits in the automobile seat is detected based on the variation of the oscillating output in compliance with the variation of the distance between the antenna and the detected member. Therefore, since the detected member does not need any lead wire, mounting of the sitting detection apparatus becomes easy, and its durability can be improved. Moreover, since the detected member can be provided to the bottom face of the seat cushion, it is possible to easily apply to an existing automobile seat.

In the embodiments of the present invention, when the seat-belt is not fastened under the state that the driver or passenger sits in the automobile seat, the warning is given. Therefore, it is possible to urge the driver or passenger to fasten the seat-belt.

In the embodiments of the present invention, since the oscillation circuit stops its oscillation irrespective of the sitting/non-sitting of the driver or passenger when the seat-belt is connected to the buckle, if the stop of the oscillation is wanted for some reason or other, it is possible to stop the oscillation easily.

In the embodiments of the present invention, since the number of turns of the coil antenna is set to some turns so that Q factor is not decreased, the output variation of the oscillation circuit does not become small, and a detecting performance of the sitting detection apparatus is improved.

In the embodiments of the present invention, the FET is used as an active element for oscillation, and the diodes for limiting the oscillating amplitude of the FET are provided. Because of this, Q factor does not drop as compared with the case where a bipolar transistor is used as an active element for oscillation. Also, an optional FET can be used as the oscillating FET without considering the dispersion in production of FET.

Furthermore, in the embodiments of the present invention, the case containing the detector is provided to the bottom plate of the automobile seat so that the case does not protrude above the bottom plate. Since the bottom plate is widely used in an existing automobile seat, the detector can be attached to the automobile seat without providing anew a maintaining member for maintain the detector. Also, even when the large load is given to the automobile seat, the load is dispersed to the bottom plate, and the breakage of the detector and the slipping off in the position of the detector can be prevented. Hence, the performance and durability of the apparatus are secured. Furthermore, since the case containing the detector does not protrude above the bottom plate, the automobile seat does not become uncomfortable.

## Claims

1. A sitting detection apparatus for detecting whether a driver or passenger sits in an automobile seat, comprising:
a conductive detected member that is provided to a seat cushion of the automobile seat so as to be displaced in accordance with flexure of the seat cushion due to sitting/non-sitting of the driver or passenger; and
a detector including an oscillation circuit with an antenna which radiates a weak high-frequency wave from said antenna toward said detected member, at least said antenna being fixedly arranged in relation to the detected member so that a distance between said antenna and said detected member varies with displacement of the detected member, said detector detecting the sitting/non-sitting of the driver or passenger based on variation in oscillating output of said oscillation circuit which is caused by the displacement of said detected member.

2. The sitting detection apparatus of claim 1, wherein said detected member is a sheet shape.

3. The sitting detection apparatus of claim 2, wherein said detected member is composed of a flexible resin sheet and a metal film formed in at least one face of the resin sheet.

4. The sitting detection apparatus of claim 3, wherein said detected member is provided to a bottom face of the seat cushion.

5. The sitting detection apparatus of claim 3, wherein said detected member is provided inside the seat cushion.

6. The sitting detection apparatus of claim 1, wherein said detected member is formed by a conductive coating paint which is spread to a bottom face of the seat cushion.

7. The sitting detection apparatus of any preceding claim, wherein said antenna is a coil antenna of which the number of turns is set to some turns so that Q factor does not drop.

8. The sitting detection apparatus of claim 7, wherein said oscillation circuit includes a parallel resonance circuit including said antenna as a resonance coil, an oscillating FET, and at least one diode for limiting an oscillating amplitude of the FET.

9. The sitting detection apparatus of claim 8, wherein said diode is Schottky diode.

10. The sitting detection apparatus of claim 8 or 9, wherein said antenna has a center tap, and a predetermined constant voltage is supplied to the center tap of said antenna without being supplied to a drain of the FET.

11. The sitting detection apparatus of any preceding claim, wherein said detector further includes:
an oscillating output detection circuit, responsive to said oscillation circuit, for detecting the oscillating output of said oscillation circuit;
a sitting/non-sitting detection circuit, responsive to said oscillating output detection circuit, for detecting whether the driver or passenger sits in the automobile seat based on output of said oscillating output detection circuit;
a seat-belt detector for detecting whether a seat-belt of the automobile seat is fastened; and
a warning circuit, responsive to said sitting/non-sitting detection circuit and said seat-belt detector, for giving a warning when said sitting/non-sitting detection circuit detects that the driver or passenger sits in the automobile seat, and, when said seat-belt detector detects that the seat-belt is not fastened.

12. The sitting detection apparatus of claim 11, wherein said oscillation circuit stops its oscillation when said seat-belt detector detects that the seat-belt is fastened.

13. The sitting detection apparatus of claim 11 or 12, wherein said oscillating output detection circuit comprises:
a rectifier circuit, inputting the oscillating output of said oscillation circuit through a coupling capacitor, for full-wave rectifying the oscillating output; and
a smoothing circuit, inputting a full-wave rectified output of the rectifier circuit, for outputting the oscillating output as a voltage signal by smoothing the full-wave rectified output.

14. The sitting detection apparatus of claim 13, wherein said a capacitance value of said coupling capacitor is set to a small value so that Q factor does not drop;
and wherein said rectifier circuit has two Schottky diodes as rectifier elements.

15. The sitting detection apparatus of claim 13 or 14, wherein said sitting/non-sitting detection circuit inputs the voltage signal of said oscillating output detection circuit, and outputs a first level signal representative of the sitting or a second level signal representative of the non-sitting by means of comparing the voltage signal of said oscillating output detection circuit with a predetermined reference voltage.

16. The sitting detection apparatus of claim 15, wherein, when the seat-belt is fastened, said seat-belt detector controls so that said sitting/non-sitting detection circuit does not provide the first level signal to said warning circuit;
and wherein said warning circuit includes a switching element which is made on by the first level signal of said sitting/non-sitting detection circuit and is made off by the second level signal of said sitting/non-sitting detection circuit, and gives the warning when the switching element is made on.

17. The sitting detection apparatus of any preceding claim, wherein said detector is housed in a non-conductive case, and the case is provided to a bottom plate of the automobile seat so that the case does not protrude on the side of the seat cushion, said bottom plate being provided under the seat cushion and maintaining a fixed position in relation to the flexure of the seat cushion due to the sitting/non-sitting of the driver or passenger.

18. The sitting detection apparatus of claim 17, wherein a container portion is provided to a portion of said bottom plate which faces said detected member, and said case in which said detector is housed is contained and fixed in said container portion.
